# EUROPÄISCHE PATENTSCHRIFT

(11) **EP 1 338 614 B1**
(45) Veröffentlichungstag und Bekanntmachung des Hinweises auf die Patenterteilung: **20.12.2006**
(21) Anmeldenummer: 03002605.8
(22) Anmeldetag: 10.02.2003
(51) Int. Cl.: C08G 18/10, C08G 18/12

(54) **Verfahren zur Herstellung von weichen, gut entformbaren thermoplastischen Polyurethanelastomeren mit geringer Schwindung**
Method for the production of soft, easily demouldable thermoplastic polyurethane elastomers with a low shrinkage
Procédé de production des elastomères de polyuréthane thermoplastiques, mous, facilement démoulables et à retrait minime

(30) Priorität: 23.02.2002 DE 10207774
(43) Veröffentlichungstag der Anmeldung: 27.08.2003
(73) Patentinhaber: Bayer MaterialScience AG, 51368 Leverkusen (DE)
(72) Erfinder: Bräuer, Wolfgang, Dr., 51375 Leverkusen (DE); Heidingsfeld, Herbert, 50226 Frechen (DE); Hoppe, Hans-Georg, 42799 Leichlingen (DE); Wussow, Hans-Georg, Dr., 40597 Düsseldorf (DE); Eggeling, Eva, Dr., 51063 Köln (DE); Röhrig, Wolfgang, 51467 Bergisch Gladbach (DE)

(56) Entgegenhaltungen:
- EP-A- 0 571 830
- DE-A- 19 625 987
- GB-A- 1 087 743
- US-A- 4 202 957
- US-B1- 6 309 313

## Beschreibung

Die Erfindung betrifft ein Verfahren zur Herstellung von weichen, gut entformbaren Formmassen aus thermoplastischen Polyurethanen mit geringer Schwindung, guten Kälteeigenschaften, guten mechanischen Eigenschaften und mit einer Härte von 45 bis 65 Shore A.

Thermoplastische Polyurethanelastomere (TPU) sind seit langem bekannt. Sie sind von technischer Bedeutung aufgrund der Kombination hochwertiger mechanischer Eigenschaften mit den bekannten Vorteilen der kostengünstigen, thermoplastischen Verarbeitbarkeit. Durch die Verwendung unterschiedlicher, chemischer Aufbaukomponenten lässt sich eine große Variationsbreite mechanischer Eigenschaften erzielen. Eine Übersicht über TPU, ihre Eigenschaften und Anwendungen wird z.B. in Kunststoffe 68 (1978), 819 oder in Kautschuk, Gummi, Kunststoffe 35 (1982), 568 gegeben.

TPU werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich im Allgemeinen Produkte im Bereich von 80 Shore A bis 75 Shore D.

Die Härte eines TPU wird im wesentlichen durch das Verhältnis Hartsegment (Kettenverlängerer + Isocyanat) zu Weichsegment (Polyol + Isocyanat) eingestellt. Verringert man die Menge an Hartsegment über die erwähnte Grenze von 80 Shore A hinaus nach unten, erhält man schlecht verfestigende klebrige Produkte, die in der Spritzgießverarbeitung schlecht entformen und eine starke Schwindung aufweisen.

Mit derartigem TPU sind keine wirtschaftlich vertretbaren Spritzgieß-Taktzeiten und keine ausreichende Maßhaltigkeit der Spritzgießteile gewährleistet. Zusätzlich führt eine beginnende Weichsegmentkristallisation wenig unterhalb Raumtemperatur oft zu einem deutlichen Härteanstieg, und die elastischen Eigenschaften bei diesen niedrigen Temperaturen werden so verschlechtert, dass der Gebrauchswert solcher TPU bei Kälte herabgesetzt wird.

In EP-A 0 134 455 wird gezeigt, dass durch die Verwendung von Weichmachern aus speziellen Phthalaten und Phosphaten TPU mit einer Härte von 60 bis 80 Shore A erhalten werden. Diese weichgemachten TPU zeigen jedoch, wie alle weichgemachten Kunststoffe, Nachteile durch die Verwendung der Weichmacher, wie z.B. Weichermacherausblutung mit Nachverhärtung und Geruchsproblemen. In Kontakt mit steifen Thermoplasten kann es zu Spannungsrissen kommen.

In EP-A 1 031 588 werden weiche Polyurethan-Formmassen mit geringer Schwindung im Härtebereich von 76 bis 84 Shore A durch Mischen eines 68 Shore A TPU A mit einem 85 Shore A TPU B beschrieben. Das eingesetzte härtere TPU B wird durch eine spezielle Prepolymerfahrweise hergestellt, wobei das Polyol mit dem Diisocyanat im molaren Verhältnis 1 : 2,05 bis 1 : 6,0 umgesetzt wird, so dass die Schwindung der Mischung herabgesetzt und eine gute Maßhaltigkeit erreicht wird. Dieses Verfahren ist in seiner Wirkung bei sehr niedrigen Shore A-Werten im Bereich unterhalb 75 Shore A natürlich begrenzt.

In DE-A 199 39 112 wird ein vorher hergestelltes 30 bis 80 Shore D hartes TPU unter Erhalt der großen Hartsegmentblöcke unter Zugabe von niedermolekularen Diolen im ersten Teil eines Extruders abgebaut; anschließend wird unter Zugabe von Isocyanaten, Polyolen und Katalysatoren im zweiten Teil eine neues weiches TPU erzeugt. Diese TPU weisen gute mechanische Werte und einen verringerten Abrieb auf. Das geschilderte Herstellverfahren ist sehr aufwendig, und deshalb ist die gezielte Einhaltung der TPU-Eigenschaften sehr schwierig. Zusätzlich ist die Entformbarkeit in der Spritzgießverarbeitung nicht besonders gut.

In DE-A 2 842 806 wird die Herstellung von TPU in ZSK-Maschinen unter speziellen Scherverhältnissen unter Aufteilung einer oder zweier Monomerströme in mindestens zwei Teilmengen beschrieben. Dabei werden TPU mit erhöhter Kältekerbschlagzähigkeit und erhöhter Steifigkeit mit Shore-Härten von größer 57 Shore D erhalten.

In DE-A 4 217 367 werden TPU im Bereich 70 Shore A bis 75 Shore D beschrieben, die durch eine mehrstufige Umsetzung erhalten werden, die dadurch gekennzeichnet ist, dass in der ersten Stufe Makrodiole mit Diisocyanat im Verhältnis 1,1:1 bis 5,0:1 umgesetzt werden, in der zweiten Stufe das restliche Diisocyanat zugegeben wird, und in der dritten Stufe die Umsetzung mit dem Kettenverlängerer erfolgt. Dadurch werden Produkte mit einem verbesserten Entformungsverhalten und einer verbesserten Standfestigkeit bei gleichbleibender Härte und Kälteverhalten erhalten. TPU, die weicher sind als 70 Shore A, lassen sich mit den in den Beispielen beschriebenen Polyestern und Polyethern auch mit dem dort beschriebenen Verfahren nicht erhalten. Verringert man die Menge an Hartsegment über die erwähnte Grenze von 70 Shore A hinaus nach unten, erhält man Produkte, die aufgrund von Weichsegmentkristallisation den Härtebereich nur kurzfristig halten können und bei Lagerung oder Temperung stark nachverhärten.

Aufgabe war es daher, ein Verfahren zur Verfügung zu stellen, mit dem sehr weiche TPU im Bereich von 45 bis 65 Shore A hergestellt werden können, die gleichzeitig gut entformbar sind, eine sehr geringe Schwindung aufweisen und zusätzlich auch bei tiefen Temperaturen noch hochelastisch sind.

Die Aufgabe konnte durch das erfindungsgemäße Verfahren zur Herstellung thermoplastischer Polyurethanelastomere gelöst werden.

Gegenstand der Erfindung ist ein Verfahren zur Herstellung von thermoplastisch verarbeitbaren Polyurethanelastomeren mit einer Härte von 45 bis 65 Shore A (gemessen nach DIN 53 505), einer Zugfestigkeit von größer 12 MPa (gemessen nach ISO 37), einer Schwindung von ≤ 3,5 % (gemessen nach DIN 16 770, Teil 3) und einem DMA-Speicher-Zug-E-Modul bei -10°C von kleiner 20 MPa (Messung des E-Moduls wird im Beispielteil näher erläutert), dadurch gekennzeichnet, dass gegebenenfalls in Anwesenheit von Katalysatoren
A) ein oder mehrere lineare hydroxylterminierte Polyole aus der Gruppe bestehend aus
   a) Polyester-Polyolen mit zahlenmittleren Molekulargewichten von 450 bis 5000, erhalten durch Umsetzung einer Mischung aus mindestens zwei verschiedenen mehrwertigen Alkoholen mit einer oder mehreren Dicarbonsäuren mit maximal 12 C-Atomen,
   b) Mischungen aus mindestens zwei Polyester-Polyolen mit unterschiedlichen zahlenmittleren Molekulargewichten von 450 bis 5000,
   c) Mischungen aus mindestens zwei Polyether-Polyolen mit unterschiedlichen zahlenmittleren Molekulargewichten von 450 bis 5000,
   d) Polyether-Polyolen mit zahlenmittleren Molekulargewichten von 450 bis 5000, enthaltend mindestens zwei unterschiedliche Alkylenoxid-Bausteine,
   mit einem oder mehreren organischen Diisocyanaten in einem molaren NCO/OH-Verhältnis von 1,1:1 bis 1,9:1, bevorzugt 1,1:1 bis 1,7:1 zu einem isocyanat-terminierten Prepolymer umgesetzt werden,
B) das in Stufe A) hergestellte Prepolymer mit vorzugsweise dem gleichen organischen Diisocyanat wie unter Schritt A) abgemischt wird,
C) das in Stufe B) erhaltene Gemisch mit einem oder mehreren Diol-Kettenverlängerem mit Molekulargewichten von 60 bis 400 umgesetzt wird,
wobei ein molares NCO:OH-Verhältnis aus den in A), B) und C) eingesetzten Komponenten von 0,9:1 bis 1,1:1 eingestellt wird und wobei das Verhältnis aus den OH-Gruppen des Polyols zu den OH-Gruppen des Kettenverlängerers 0,3:1 bis 2,0:1, besonders bevorzugt 0,4:1 bis 1,5:1 beträgt.

Als organische Diisocyanate kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl -2,6-cyclohexan-diisocyanat sowie die entsprechenden Isomerengemische, 4,4'- Dicyclohexylmethandiisocyanat, 2,4'- Dicyclohexylmethandiisocyanat und 2,2'-Dicyclohexylmethandiisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-%, 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Als Polyole werden lineare hydroxylterminierte Polyole eingesetzt. Produktionsbedingt enthalten diese oft kleine Mengen an nichtlinearen Verbindungen. Häufig spricht man daher auch von "im wesentlichen linearen Polyolen".

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im wesentlichen linearen Polyether-Diole besitzen vorzugsweise zahlenmittlere Molekulargewichte M̅ₙ von 450 bis 5000.

Bevorzugt werden Polyether mit mindestens zwei unterschiedlichen Alkylenoxid-Gruppen eingesetzt, beispielsweise erhältlich aus der Umsetzung einer Mischung aus Ethylenglykol und 1,3-Propylenglykol, einer Mischung aus Ethylenglykol und Butandiol, einer Mischung aus 1,3-Propylenglykol und Butandiol, einer Mischung aus Butandiol und 1,5-Pentandiol oder einer Mischung aus Butandiol und Neopentylglykol. Diese Polyether weisen bevorzugt zahlenmittlere Molekulargewichte von 450 bis 5000 auf.

Weiterhin können auch Mischungen aus mindestens zwei Polyether-Diolen mit verschiedenen zahlenmittleren Molekulargewichten im Bereich von 450 bis 5000 eingesetzt werden. Das unterschiedliche Molekulargewicht der Polyether in der Mischung kann dabei durch den Einsatz verschiedener Alkohole und/oder bei Einsatz gleicher Alkohole durch die Kettenlänge erhalten werden.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bemsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol.

Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren, wie ω-Hydroxycapronsäure oder Polymerisationsprodukte von Lactonen, z.B. gegebenenfalls substituierten ω-Caprolactonen.

Bevorzugt eingesetzt werden Polyester, erhältlich aus mindestens zwei verschiedenen mehrwertigen Alkoholen mit einer oder mehreren Dicarbonsäuren mit maximal 12 C-Atomen, beispielsweise Ethandiol-1,4-butandiol-polyadipate, 1,6-Hexandiol-neopentylglykol-polyadipate, 1,6-Hexandiol-1,4-butandiol-polyadipate.

Weiterhin können auch Mischungen aus Polyestern mit verschiedenen Molekulargewichten eingesetzt werden. Die unterschiedlichen Molekulargewichte der Polyester in der Mischung können dabei durch Einsatz verschiedener mehrwertiger Alkohole und/oder Dicarbonsäuren und/oder bei Einsatz gleicher Alkohole und Dicarbonsäuren durch die Kettenlänge erzeugt werden.

Die Polyester-Diole besitzen zahlenmittlere Molekulargewichte M̅ₙ im Bereich von 450 bis 5000.

Als Kettenverlängerungsmittel werden Diole, gegebenenfalls in Abmischung mit kleinen Mengen an Diaminen, mit einem Molekulargewicht von 60 bis 400 eingesetzt, vorzugsweise aliphatische Diole mit 2 bis 14 Kohlenstoffatomen, wie z.B. Ethandiol, 1,6-Hexandiol, Diethylenglykol, Dipropylenglykol, Ethylenglykol und insbesondere 1,4-Butandiol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z. B. als Kettenabbrecher oder Entformungshilfen, zugesetzt werden. Beispielhaft genannt seien Alkohole, wie Oktanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, dass das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,1:1,0, vorzugsweise 0,95:1,0 bis 1,10:1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU beträgt in der Regel etwa 0 bis 5 Gew.-%, bevorzugt 0 bis 1 Gew.-% , bezogen auf TPU.

Neben den TPU-Komponenten und den Katalysatoren können auch Hilfsmittel und/oder Zusatzstoffe zugesetzt werden. Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Auch können andere Elastomere wie Kautschuk, Ethylen/Vinylacetatcopolymere, Styrol/Butadiencopolymere sowie andere TPU verwendet werden. Weiterhin zur Einarbeitung geeignet sind handelsübliche Weichmacher wie Phosphate, Phthalate, Adipate, Sebacate und Alkylsulfonsäureester.

Das TPU wird durch Einstellung des molaren Verhältnisses von Polyol zu Kettenverlängerer auf eine Shore A-Härte von 45 bis 65 eingestellt.

Das TPU wird mehrstufig wie folgt hergestellt:

Die Mengen an den Reaktionskomponenten zur Prepolymerbildung der Stufe A) werden so gewählt, dass das NCO/OH-Verhältnis von Diisocyanat zu Polyol in Stufe A) 1,1:1 bis 1,9:1, bevorzugt 1,1 : 1 bis 1,7 : 1 beträgt.

Die Komponenten werden innig gemischt, und die Prepolymerreaktion der Stufe A) wird vorzugsweise im wesentlichen zum vollständigen Umsatz (bezogen auf die Polyolkomponente) gebracht.

Anschließend erfolgt die Einmischung von weiterem Diisocyanat (Stufe B), bevorzugt dem gleichen Diisocyanat wie unter Stufe A).

Danach wird der Kettenverlängerer intensiv eingemischt und die Reaktion zu Ende geführt (Stufe C).

Das TPU kann diskontinuierlich oder kontinuierlich hergestellt werden. Die bekanntesten technischen Herstellverfahren dafür sind das Bandverfahren (GB-A 1 057 018) und das Extruderverfahren (DE-A 1 964 834 , DE-A 2 059 570 und US-A 5 795 948).

Zur Herstellung der TPU eignen sich die bekannten Mischaggregate, vorzugsweise die, die mit hoher Scherenergie arbeiten. Für die kontinuierliche Herstellung seien beispielhaft genannt Cokneter, vorzugsweise Extruder, wie z.B. Zweiwellenextruder und Busskneter.

Das TPU kann z.B. auf einem Zweiwellenextruder dadurch hergestellt werden, dass man das Prepolymer im ersten Teil des Extruders herstellt und die Diisocyanatzugabe und die Kettenverlängerung im zweiten Teil anschließt. Dabei kann die Zugabe des Diisocyanates und des Kettenverlängerers parallel in die gleiche Dosieröffnung des Extruders oder bevorzugt nacheinander in zwei getrennten Öffnungen erfolgen. Erfindungsgemäß darf die Dosierung des Kettenverlängers allerdings nicht vor der Dosierung des weiteren Diisocyanates erfolgen.

Das Prepolymer kann aber auch außerhalb des Extruders in einem separaten, vorgeschalteten Prepolymerreaktor, diskontinuierlich in einem Kessel oder kontinuierlich in einem Rohr mit Statikmischem oder einem gerührten Rohr (Rohrmischer) hergestellt werden.

Ein in einem separaten Prepolymerreaktor hergestelltes Prepolymer kann aber auch mittels eines ersten Mischapparates, z.B. eines Statikmischers, mit dem Diisocyanat und mittels eines zweiten Mischapparates, z.B. eines Mischkopfes, mit dem Kettenverlängerer vermischt werden. Anschließend wird dieses Reaktionsgemisch analog dem bekannten Bandverfahren kontinuierlich auf einen Träger, bevorzugt ein Förderband, aufgebracht, wo man es bis zur Erstarrung des Materials ggf. unter Beheizung des Bandes zum TPU reagieren lässt.

Die durch das erfindungsgemäße Verfahren hergestellten TPU sind sehr weich (45 bis 65 Shore A) und weisen gute mechanische Eigenschaften auf. Bei der Spritzgießverarbeitung verfestigen die Teile sehr schnell und sind deshalb gut entformbar. Die Spritzgießteile besitzen aufgrund einer geringen Schwindung eine hohe Maßhaltigkeit und sind sehr wärmestabil.

Auch bei niedrigen Temperaturen haben die durch das erfindungsgemäße Verfahren hergestellten TPU noch sehr gute elastische Eigenschaften (keine Weichsegmentkristallisation), was sich durch ein niedriges Modulniveau bei -10°C in der dynamisch mechanischen Analyse über der Temperatur (DMA: Zug-E-Modul) zeigt.

Die durch das erfindungsgemäße Verfahren hergestellten TPU werden zur Herstellung von weichen, flexiblen Spritzgießteilen, z.B. Schuhsohlen, Griffschalen, Dichtungsteilen und Staubkappen verwendet. In Kombination mit anderen Thermoplasten gelangt man zu Produkten mit einem angenehmen Griffgefühl (Hart-Weich-Kombination).

Auch Extrusionsartikel, wie z.B. Profile und Schläuche, sind daraus herstellbar.

Die Erfindung soll anhand der nachfolgenden Beispiele näher erläutert werden.

### Beispiele

In den Tabellen 1 und 2 werden die eingesetzten Komponenten und ihre Mengen bzw. die Eigenschaften der daraus hergestellten TPU beschrieben.

### Herstellung der TPU

### Stufe A)

In einem Reaktionsgefäß wurden gemäß Tabelle 1 das entsprechende Polyol (mit 190°C) und eine Teilmenge 1 des 60°C warmen 4,4'-Diphenylmethandiisocyanates (MDI) unter Rühren zu einem Umsatz von > 90mol-%, bezogen auf das Polyol, gebracht.

In den Beispielen 1 und 2 wurde die Reaktion mit 3 ppm (bezogen auf Polyol) Tyzor AA 95 (von Dupont) katalysiert und in Beispiel 7 mit 15 ppm.

### Stufe B)

Dem gerührten Reaktionsgemisch aus A) wurde die MDI-Teilmenge 2 zugefügt.

### Stufe C)

Anschließend wurde Butandiol-1,4 intensiv eingemischt, und das Reaktionsgemisch wurde nach ca. 15 sec auf ein beschichtetes Blech gegossen und bei 120°C 30 Minuten nachgetempert.

**Tabelle 1: Komponenten**

| **Beispiel** | **Polyol** | **Polyolmenge [mol]** | **MDI Teilmenge 1 [mol]** | **MDI Teilmenge 2 [mol]** | **1,4-Butandiolmenge [mol]** |
|---|---|---|---|---|---|
| **1*** | 2 | 1 | 1,90 | 0 | 0,90 |
| **2** | 2 | 1 | 1,25 | 0,65 | 0,90 |
| **3** | 1 | 1 | 1,20 | 0,20 | 0,40 |
| **4** | 3 | 1 | 1,25 | 0,65 | 0,90 |
| **5*** | 4 | 1 | 1,50 | 0,40 | 0,90 |
| **6** | 1 und 4 | 0,5+0,5 | 1,20 | 0,20 | 0,40 |
| **7** | 5 | 1 | 1,25 | 1,15 | 1,40 |
| **8*** | 6 | 1 | 1,50 | 0,50 | 1,00 |

| | | | | | |
|---|---|---|---|---|---|
| Polyol 1 = Terathane^{®}1000 (von Dupont:Polytetramethylenetherglykol; Molgewicht 1000) Polyol 2 = Desmophen^{®}2028 (von Bayer:Hexandiol-Neopentylglykol-adipat; Molgewicht 2000) Polyol 3 = Desmophen^{®}2001 (von Bayer:Butandiol-Ethylenglykol-adipat; Molgewicht 2000) Polyol 4 = Terathane^{®}2000 (von Dupont:Polytetramethylenetherglykol; Molgewicht 2000) Polyol 5 = Polyether L 5050 (von Bayer : Polyethylen-propylenglykol; Molgewicht 2000) Polyol 6 = Desmophen PE 225 B (von Bayer : Butandiol-adipat; Molgewicht 2200) *nicht erfindungsgemäßes Vergleichsbeispiel | | | | | |

Die Gießplatten aus Stufe C wurden geschnitten und granuliert. Das Granulat wurde in einer Spritzgießmaschine D 60 (32-Schnecke) der Firma Mannesmann aufgeschmolzen und zu Stäben (Formtemperatur: 40°C; Stabgröße:80x10x4mm) bzw. Platten (Formtemperatur: 40°C; Größe: 125x50x2 mm) geformt.

### Messungen:

Die Messung der Härte erfolgte nach DIN 53505, die Messung im Zugversuch nach ISO 37. Die Messung der für die Beurteilung der Spritzgießverarbeitung wichtigen Schwindung erfolgte analog DIN 16770 (Teil 3).

Angegeben ist die relative Längsschwindung nach Temperung (80°C/15 Stunden) der Spritzgießkörper in % in Bezug zur Formlänge.

### Dynamisch mechanische Analyse (DMA: Speicher-Zug-E-Modul)

Aus den Spritzplatten wurden Rechtecke (30 mm x 10 mm x 2 mm) gestanzt. Diese Prüfplatten wurden unter konstanter Vorlast - gegebenenfalls vom Speichermodul abhängig - periodisch mit sehr kleinen Deformationen angeregt und die auf die Einspannung einwirkende Kraft als Funktion der Temperatur und Anregungsfrequenz gemessen.

Die zusätzlich aufgebrachte Vorlast dient dazu, im Zeitpunkt negativer Deformationsamplitude die Probe noch ausreichend gespannt zu halten.

Die DMA-Messungen wurden mit dem Seiko DMS Modell 210 der Firma Seiko mit 1 HZ im Temperaturbereich von -150°C bis 200°C mit einer Heizrate von 2°C/min durchgeführt.

Zur Charakterisierung des erfindungsgemäßen Verhaltens in der Kälte wurde der Speicher-Zug-E-Modul bei -10°C und bei +20°C zum Vergleich gemessen und angegeben.

Zur Charakterisierung der Wärmestabilität ist die Temperatur T angeben, bei der 2 MPa unterschritten wird , d.h. keine stabile Form des Spritzgießteils mehr gehalten wird. Je höher der Temperaturwert ist, desto stabiler ist das TPU.

Das **Verfestigungsverhalten** in der Spritzgießverarbeitung wird charakterisiert durch die Härtemessung an einem Normprüfkörper direkt beim Entformen (nach 0 sec) und 60 sec nach Entformen. Je höher diese beiden Anfangswerte sind , desto schneller verfestigt das TPU und desto schneller kann entformt werden.

**Tabelle 2: Ergebnisse**

| **Beispiel** | | **1*** | **2** | **3** | **4** | **5*** | **6** | **7** | **8*** |
|---|---|---|---|---|---|---|---|---|---|
| **Härte sofort** | **Shore A** | 60 | 62 | 64 | 61 | 64 | 59 | 60 | 85 |
| **Härte nach 4 Wochen** | **Shore A** | 60 | 62 | 65 | 61 | 66 | 59 | 60 | 95 |
| **Schwindung Platte** | % | 7,1 | 2,6 | 3 | 1,8 | 0,7 | 2,6 | 1,3 | 10,3 |
| **Spritzgießverarbeitung:** | | | | | | | | | |
| **Härte nach 0 sec** | **Shore A** | 32 | 34 | 37 | 37 | 29 | 28 | 26 | 38 |
| **Härte nach 60 sec** | **Shore A** | 35 | 37 | 43 | 39 | 45 | 30 | 28 | 43 |
| **DMA-Messung:** | | | | | | | | | |
| **E-Modul (-10°C)** | **MPa** | 9 | 10 | 9 | 12 | 75 | 16 | 9 | 280 |
| **E-Modul (20°C)** | **MPa** | 6 | 6 | 7 | 7 | 9 | 6 | 6 | 107 |
| **T (2 MPa)** | **°C** | 96 | 106 | 113 | 105 | 128 | 113 | 129 | 129 |
| **Zugfestigkeit MPa** | | 18 | 17 | 32 | 20 | 32 | 23 | 13 | 44 |
| **Zugdehnung %** | | 765 | 850 | 739 | 813 | 759 | 751 | 880 | 620 |

| | | | | | | | | | |
|---|---|---|---|---|---|---|---|---|---|
| *nicht erfindungsgemäßes Vergleichsbeispiel | | | | | | | | | |

Nach dem erfindungsgemäßen, mehrstufigen Verfahren kommt man in einfacher Weise direkt zu einem sehr weichen TPU, auch ohne Zusatz von Weichmachern.

Diese TPU haben sehr gute mechanische Eigenschaften, sind gut verarbeitbar und aufgrund einer schnellen Verfestigungsgeschwindigkeit gut entformbar. Die Spritzgießteile weisen für TPU mit dieser geringen Härte eine sehr geringe Schwindung auf.

Die E-Modulwerte der DMA bei -10°C sind im gleichen Bereich wie die bei +20°C, d.h. die Produkte haben auch in der Kälte noch gute elastische Eigenschaften. Eine Nachverhärtung (nach 4 Wochen) tritt ebenfalls nicht auf. Bei hohen Temperaturen sind die erfindungsgemäßen TPU sehr wärmestabil.

Beim Einsatz eines Butandiol-Adipates als Polyester kommt man trotz der gleichen niedrigen rechnerischen Härte aufgrund der Weichsegmentkristallisation nicht in den gewünschten weichen Bereich (Vergleichsbeispiel 8).

## Patentansprüche

1. Verfahren zur Herstellung von thermoplastisch verarbeitbaren Polyurethanelastomeren mit einer Härte von 45 bis 65 Shore A (gemessen nach DIN 53 505), einer Zugfestigkeit von größer 12 MPa (gemessen nach ISO 37), einer Schwindung von ≤ 3,5 % (gemessen nach DIN 16 770, Teil 3) und einem DMA-Speicher-Zug-E-Modul bei -10°C von kleiner 20 MPa, **dadurch gekennzeichnet, dass** gegebenenfalls in Anwesenheit von Katalysatoren
A) ein oder mehrere lineare hydroxylterminierte Polyole aus der Gruppe bestehend aus
a) Polyester-Polyolen mit zahlenmittleren Molekulargewichten von 450 bis 5000, erhalten durch Umsetzung einer Mischung aus mindestens zwei verschiedenen mehrwertigen Alkoholen mit einer oder mehreren Dicarbonsäuren mit maximal 12 C-Atomen,
b) Mischungen aus mindestens zwei Polyester-Polyolen mit unterschiedlichen zahlenmittleren Molekulargewichten von 450 bis 5000,
c) Mischungen aus mindestens zwei Polyether-Polyolen mit unterschiedlichen zahlenmittleren Molekulargewichten von 450 bis 5000,
d) Polyether-Polyolen mit zahlenmittleren Molekulargewichten von 450 bis 5000, enthaltend mindestens zwei unterschiedliche Alkylenoxid-Bausteine,
mit einem oder mehreren organischen Diisocyanaten in einem molaren NCO/OH-Verhältnis von 1,1:1 bis 1,9:1, bevorzugt 1,1:1 bis 1,7:1 zu einem isocyanat-terminierten Prepolymer umgesetzt werden,
B) das in Stufe A) hergestellte Prepolymer mit organischen Diisocyanaten abgemischt wird,
C) das in Stufe B) erhaltene Gemisch mit einem oder mehreren Diol-Kettenverlängerern mit Molekulargewichten von 60 bis 400 umgesetzt wird,
wobei ein molares NCO:OH-Verhältnis aus den in A), B) und C) eingesetzten Komponenten von 0,9:1 bis 1,1:1 eingestellt wird und wobei das Verhältnis aus den OH-Gruppen des Polyols zu den OH-Gruppen des Kettenverlängerers 0,3:1 bis 2,0:1, besonders bevorzugt 0,4:1 bis 1,5:1 beträgt.

2. Verfahren zur Herstellung thermoplastisch verarbeitbarer Polyurethanelastomere gemäß Anspruch 1, **dadurch gekennzeichnet, dass** das organische Diisocyanat 4,4'-Diphenylmethandiisocyanat, Isophorondiisocyanat, 1,6-Hexamethylendiisocyanat, 1,5-Naphthylendiisocyanat oder 4,4'-Dicyclohexylmethandiisocyanat ist.

3. Verfahren zur Herstellung thermoplastisch verarbeitbarer Polyurethanelastomere gemäß Anspruch 1, **dadurch gekennzeichnet, dass** der Diol-Kettenverlängerer Ethylenglykol, 1,4-Butandiol, 1,6-Hexandiol, 1,4-Di-(betahydroxyethyl)-hydrochinon und/oder 1,4-Di-(betahydroxyethyl)-bisphenol A ist.

4. Verwendung der gemäß den Ansprüchen 1 bis 3 hergestellten thermoplastisch verarbeitbaren Polyurethanelastomeren zur Herstellung von Spritzgießartikeln und Extrusionsartikeln.

## Claims

1. Process for the preparation of thermoplastically processable polyurethane elastomers which have a hardness of 45 to 65 Shore A (measured in accordance with DIN 53 505), a tensile strength of greater than 12 MPa (measured in accordance with ISO 37), a shrinkage of ≤ 3.5% (measured in accordance with DIN 16 770, part 3) and a DMA storage E modulus in tension at -10°C of less than 20 MPa, **characterized in that**, optionally in the presence of catalysts,
A) one or more linear hydroxyl-terminated polyols from the group consisting of
a) polyester polyols with number-average molecular weights of 450 to 5,000, obtained by reaction of a mixture of at least two different polyhydric alcohols with one or more dicarboxylic acids having a maximum of 12 C atoms,
b) mixtures of at least two polyester polyols with different number-average molecular weights of 450 to 5,000,
c) mixtures of at least two polyether polyols with different number-average molecular weights of 450 to 5,000,
d) polyether polyols with number-average molecular weights of 450 to 5,000, containing at least two different alkylene oxide units,
are reacted with one or more organic diisocyanates in a molar NCO/OH ratio of 1.1:1 to 1.9:1, preferably 1.1:1 to 1.7:1, to give an isocyanate-terminated prepolymer,
B) the prepolymer prepared in stage A) is mixed with organic diisocyanates,
C) the mixture obtained in stage B) is reacted with one or more diol chain lengtheners with molecular weights of 60 to 400,
wherein a molar NCO:OH ratio of the components employed in A), B) and C) of 0.9:1 to 1.1:1 is established, and wherein the ratio of the OH groups of the polyol to the OH groups of the chain lengthener is 0.3:1 to 2.0:1, particularly preferably 0.4:1 to 1.5:1.

2. Process for the preparation of thermoplastically processable polyurethane elastomers according to claim 1, **characterized in that** the organic diisocyanate is 4,4'-diphenylmethane diisocyanate, isophorone diisocyanate, 1,6-hexamethylene diisocyanate, 1,5-naphthylene diisocyanate or 4,4'-dicyclohexylmethane diisocyanate.

3. Process for the preparation of thermoplastically processable polyurethane elastomers according to claim 1, **characterized in that** the diol chain lengthener is ethylene glycol, 1,4-butanediol, 1,6-hexanediol, 1,4-di-(betahydroxyethyl)-hydroquinone and/or 1,4-di-(betahydroxyethyl)-bisphenol A.

4. Use of the thermoplastically processable polyurethane elastomers prepared according to claims 1 to 3 for the production of injection-moulded articles and extruded articles.

## Revendications

1. Procédé de production d'élastomères de polyuréthane aptes au traitement thermoplastique, possédant une dureté Shore A comprise entre 45 et 65 (mesurée selon DIN 53 505), une résistance à la traction supérieure à 12 MPa.s (mesurée selon ISO 37), un retrait de ≤ 3,5 % (mesuré selon DIN 16 770, partie 3) et un module de conservation - élasticité en traction ADM à -10 °C inférieur à 20 MPa.s, **caractérisé en ce que**, le cas échéant en présence de catalyseurs:
A) un ou plusieurs polyols linéaires à terminaison(s) hydroxyle appartenant au groupe se composant des
a) polyesters polyols possédant des poids moléculaires moyen en nombre compris entre 450 et 5000, obtenus par mise en réaction d'un mélange d'au moins deux alcools polyvalents différents avec un ou plusieurs acides dicarboxyliques comportant 12 atomes de C au maximum,
b) mélanges d'au moins deux polyesters polyols possédant des poids moléculaires moyens en nombre différents compris entre 450 et 5000,
c) mélanges d'au moins deux polyéthers polyols possédant des poids moléculaires moyens en nombre différents compris entre 450 et 5000,
d) polyéthers polyols possédant des poids moléculaires moyens en nombre compris entre 450 et 5000, contenant au moins deux composants d'oxyde d'alkylène différents,
sont transformés avec un ou plusieurs diisocyanates organiques dans un rapport molaire NCO:OH de 1,1:1 à 1,9:1, de préférence de 1,1:1 à 1,7:1, en un prépolymère à terminaison(s) isocyanate,
B) le prépolymère produit dans l'étape A) est mélangé avec des diisocyanates organiques,
C) on fait réagir le mélange obtenu dans l'étape B) avec un ou plusieurs agents prolongateurs de chaîne à base de diol possédant des poids moléculaires compris entre 60 et 400,
un rapport molaire NCO:OH des composants mis en oeuvre en A), B) et C) compris entre 0,9:1 et 1,1:1 étant ajusté et le rapport entre les groupes OH du polyol et les groupes OH de l'agent prolongateur de chaîne atteignant 0,3:1 à 2,0:1, avec une préférence particulière, 0,4:1 à 1,5:1.

2. Procédé de production d'élastomères de polyuréthane aptes au traitement thermoplastique selon la revendication 1, **caractérisé en ce que** le diisocyanate organique est le 4,4'-diphénylméthanedüsocyanate, l'isophoronediisocyanate, le 1,6-hexaméthylènediisocyanate, le 1,5-naphtylènediisocyanate ou le 4,4'-dicyclohexylméthanedüsocyanate.

3. Procédé de production d'élastomères de polyuréthane aptes au traitement thermoplastique selon la revendication 1, **caractérisé en ce que** l'agent prolongateur de chaîne à base de diol est l'éthylèneglycol, le 1,4-butanediol, le 1,6-hexanediol, le 1,4-di-(bêtahydroxyéthyl)-hydroquinone et/ou le 1,4-di-(bêtahydroxyéthyl)-bisphénol A.

4. Utilisation des élastomères de polyuréthane aptes au traitement thermoplastique, produits selon les revendications 1 à 3, pour la production d'articles moulés par injection et d'articles extrudés.
